# EUROPEAN PATENT APPLICATION

(11) **EP 4 598 268 A1**
(43) Date of publication of application: **06.08.2025**
(21) Application number: 23903734.4
(22) Date of filing: 27.10.2023
(51) Int. Cl.: H05B 6/06, H05B 6/12, H05B 1/02

(54) **INDUCTION HEATING COOKER**

(30) Priority: 16.12.2022 JP 2022201364
(71) Applicant: Samsung Electronics Co., Ltd., Suwon-si, Gyeonggi-do 16677 (KR)
(72) Inventor: NISHIKOORI, Nobuharu, Yokohama-shi, Kanagawa 230--0027 (JP)
(74) Representative: Walaski, Jan Filip
(86) International application number: PCT/KR2023/016828
(87) International publication number: WO 2024/128531

(57) **Abstract**

A disclosed induction heating cooker includes a plurality of heating coils. The plurality of heating coils are provided to heat an object to be heated on a top plate. Each of the plurality of heating coils includes a coil substrate formed by stacking a plurality of pattern layers of six or more layers, each of which has a coil pattern formed therein. The coil substrate includes a plurality of series pattern groups each including a plurality of coil patterns connected in series. The plurality of series pattern groups are connected in parallel.

## Description

### Technical Field

The present disclosure relates to an induction heating cooker.

### Background Art

In order to make an induction heating cooker thinner or lighter, the thinning of a heating coil used in the induction heating cooker has been considered. In order to realize the thinning of the heating coil, it is considered to use a coil substrate of a printed circuit board (PCB board) type used for non-contact power supply disclosed in Patent Document 1 (Japanese Patent Application Laid-Open No. 2019-186235) and Patent Document 2 (Japanese Patent Application Laid-Open No. 2019-41273).

### Disclosure of Invention

### Solution to Problem

An induction heating cooker according to an aspect of the present disclosure may include a top plate on which an object to be heated is placed and a plurality of heating coils. The plurality of heating coils are provided to heat the object to be heated on the top plate. Each of the plurality of heating coils may include a coil substrate formed by stacking a plurality of pattern layers of six or more layers, each of which has a coil pattern formed therein. The coil substrate may include a plurality of series pattern groups, each of which includes a plurality of coil patterns connected in series. The plurality of series pattern groups may be connected in parallel. An inverter circuit supplies an alternating current to the heating coil. A processor controls the inverter circuit.

### Brief Description of Drawings

FIG. 1 is a schematic diagram of an induction heating cooker according to an embodiment of the present disclosure.
FIG. 2 is a plan view schematically illustrating a coil substrate according to an embodiment of the present disclosure.
FIG. 3 is a cross-sectional view schematically illustrating a coil substrate having a 16-layer structure according to an embodiment of the present disclosure.
FIG. 4 is a plan view schematically illustrating coil patterns of the first and second layers of a coil substrate having a 6-layer structure according to an embodiment of the present disclosure.
FIG. 5 is a schematic diagram illustrating an example of wiring of a coil substrate having a 6-layer structure according to an embodiment of the present disclosure.
FIGS. 6A and 6B are schematic diagrams illustrating examples of wiring of a coil substrate having a 6-layer structure according to an embodiment of the present disclosure.
FIG. 7 is a schematic diagram illustrating an example of wiring of a coil substrate having a 12-layer structure according to an embodiment of the present disclosure.
FIG. 8 is a schematic diagram illustrating an example of wiring of a coil substrate having a 12-layer structure according to an embodiment of the present disclosure.
FIG. 9 is an experimental result showing coil loss in examples of wiring of a coil substrate having a 12-layer structure illustrated in FIGS. 7 and 8.

### Mode for the Invention

It should be understood that various embodiments in this document and terms used therein are not intended to limit the technical features described herein to particular embodiments and that the present disclosure includes various modifications, equivalents, or substitutions of the embodiments.

With regard to the description of the drawings, like reference numerals may be used to represent like or related elements.

A singular form of a noun corresponding to an item may include one or a plurality of the items unless the context clearly indicates otherwise.

As used herein, each of the phrases such as "A or B," "at least one of A and B, "at least one of A or B," "A, B, or C," "at least one of A, B, and C," and "at least one of A, B, or C" may include any one of the items listed together in a corresponding one of the phrases, or all possible combinations thereof.

The term "and/or" includes any combination of a plurality of associated elements listed, or any one of the plurality of associated listed elements.

Terms such as "first," "second," etc. may be used simply to distinguish an element from other elements and do not limit the elements in any other respect (e.g., importance or order).

It will be understood that when an element (e.g., a first element) is referred to, with or without the term "functionally" or "communicatively", as being "coupled" or "connected" to another element (e.g., a second element), the element may be coupled to the other element directly (e.g., in a wired manner), wirelessly, or via a third element.

The terms such as "comprise," "include," or "have" are intended to specify the presence of stated features, numbers, steps, operations, elements, components, or combinations thereof, but do not preclude the presence or addition of one or more other features, numbers, steps, operations, elements, components, or combinations thereof.

It will also be understood that when an element is referred to as being "connected," "coupled," "supported," or "in contact" with another element, this includes not only when the elements are directly connected, coupled, supported, or in contact, but also when they are indirectly connected, coupled, supported, or in contact via a third element.

It will also be understood that when an element is referred to as being "on" another element, the element may be directly on the other element, or intervening elements may also be present therebetween.

An induction heating cooker may include a coil substrate. A coil substrate having a two-layer coil pattern structure may be adopted as the coil substrate. In order to implement an induction heating cooker with a large power (maximum of 3 kW or more) by using a coil substrate having a two-layer coil pattern structure, the thickness of copper in one layer (the thickness of the coil pattern) needs to be approximately 500 µm. In this case, the influence of a skin effect may increase, which may increase coil loss. In order to implement a large power while reducing the skin effect, a method, in which the thickness and width of the coil pattern are made small and a plurality of coil patterns are connected in parallel to secure current capacity, may be considered. In this case, the number of interlayer connections for connecting the plurality of coil patterns in parallel may increase, and coil loss may also increase according to the wiring length.

The present disclosure provides an induction heating cooker employing a coil substrate having a multilayer coil pattern structure capable of reducing the number of interlayer connections while reducing coil loss. Hereinafter, embodiments of the induction heating cooker according to the present disclosure will be described with reference to the drawings.

### <Configuration of the induction heating cooker>

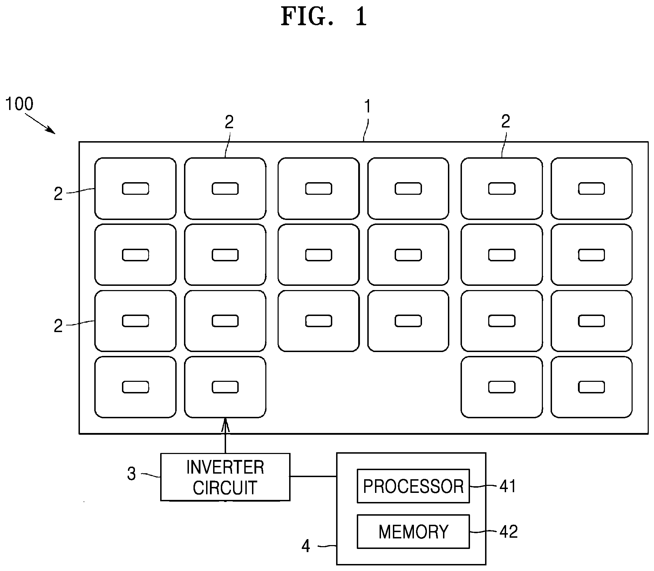

FIG. 1 is a schematic diagram of an induction heating cooker 100 according to an embodiment of the present disclosure. The induction heating cooker 100 according to an embodiment of the present disclosure inductively heats an object to be heated that is placed on a top plate, for example, a cooking utensil such as a cooking pot. The induction heating cooker 100 according to an embodiment of the present disclosure may freely place and heat the object to be heated anywhere on the top plate.

Referring to FIG. 1, the induction heating cooker 100 according to an embodiment of the present disclosure may include a top plate 1 on which an object to be heated is placed, a plurality of heating coils 2 for heating the object to be heated, an inverter circuit 3 for supplying an alternating current to the heating coils 2, and a processor 41 for controlling the inverter circuit 3. Although not shown in the drawings, the induction heating cooker 100 may include a sensor coil for detecting the position of the object to be heated.

A flat mounting surface on which the object to be heated is placed is provided on the outer surface of the top plate 1. For example, the top plate 1 may be a flat plate formed of an electrical insulating material such as glass or ceramic.

The heating coils 2 are installed on the back surface of the top plate 1. Referring to FIG. 1, the plurality of heating coils 2 may be arranged to form a two-dimensional array type (vertical and horizontal matrix type) in a plan view.

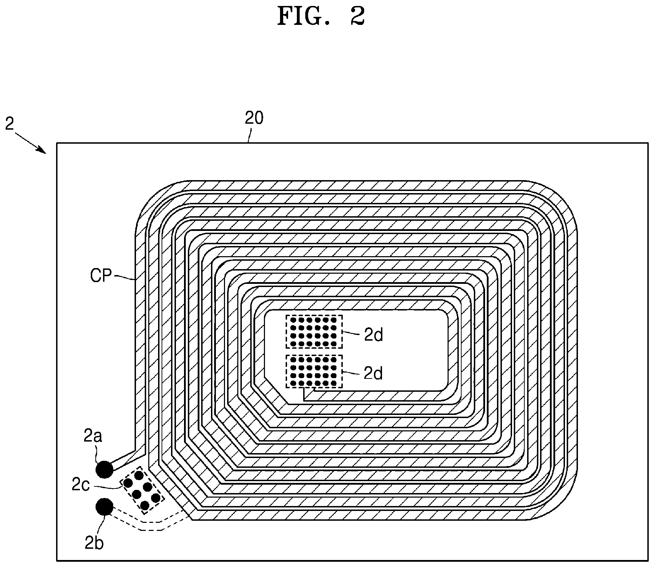

The heating coils 2 may be installed on a substrate in a sheet shape. For example, the plurality of heating coils 2 may be in the form of a printed circuit board (see a coil substrate 20 of FIG. 2) formed by a patterning process using photoresist or the like on the substrate. In an embodiment, the plurality of heating coils 2 may have the same shape and size. The shapes and sizes of the plurality of heating coils 2 do not have to be all the same. For example, at least one of the shape and size of at least one of the plurality of heating coils 2 may be different from that of the others. The specific configuration of the coil substrate 20 will be described below.

The inverter circuit 3 converts an alternating current voltage supplied from a power source (not shown) into an arbitrary driving frequency and outputs the arbitrary driving frequency to the heating coils 2. For example, the inverter circuit 3 may be a half-bridge inverter circuit using a switching element, or may be a full-bridge inverter circuit.

A control device 4 may include the processor 41, for example, a central processing unit (CPU), and a memory 42. The control device 4 may further include an input unit. The processor 41 reads and executes a program stored in the memory 42. Accordingly, the processor 41 controls the inverter circuit 3 according to the program stored in the memory 42.

In an embodiment, the processor 41 may control the inverter circuit 3 to selectively supply power only to a heating coil 2 located below or near the object to be heated, which is placed on the top plate 1, from among the plurality of heating coils 2. The position of the object to be heated, which is placed on the top plate 1, may be detected by a position sensor, such as an inductive proximity coil, installed on the back surface of the top plate 1. The processor 41 may control the power supplied to each heating coil 2 based on a detection value of a current sensor (not shown) installed corresponding to each heating coil 2 in the inverter circuit 3.

### <Coil substrate 20>

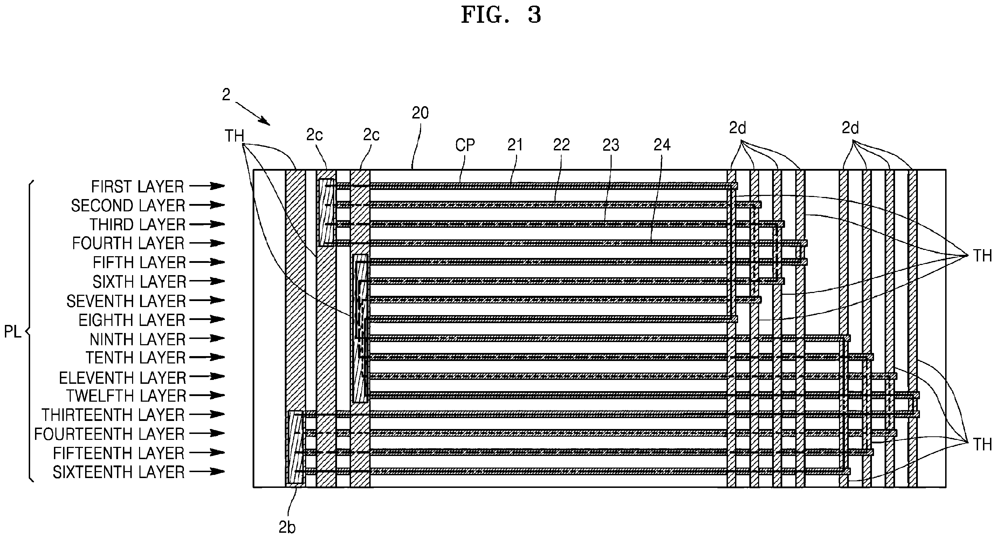

FIG. 2 is a plan view schematically illustrating a coil substrate 20 according to an embodiment of the present disclosure. Fig. 3 is a cross-sectional view schematically illustrating a coil substrate 20 having a 16-layer structure according to an embodiment of the present disclosure. Referring to FIGS. 2 and 3, the coil substrate 20 may be a printed circuit board formed by stacking six or more pattern layers PL on which coil patterns CP are formed. An insulating material is interposed between the pattern layers PL. According to the induction heating cooker 100 having the coil substrate 20, because the coil substrate 20 has a stacked structure including six or more layers, the thickness of one layer of the heating coil, for example, the thickness of copper, may be made small, thereby reducing the influence of a surface effect and reducing coil loss.

In the coil substrate 20, one coil pattern CP is formed in each pattern layer. For example, the coil pattern CP may be spiral. In an embodiment, the coil pattern CP may be formed by a plurality of coil elements that are approximately rectangular in a plan view as shown in FIG. 2. In an embodiment, the coil pattern CP may be formed by a plurality of coil elements that are circular in a plan view. The shape of the coil elements forming the coil pattern CP is not limited to the shape described above. The coil substrate 20 may have a plurality of series pattern groups. The plurality of series pattern groups may be connected in parallel with each other. Each of the plurality of series pattern groups may have a plurality of coil patterns CP that are connected in series. The plurality of series pattern groups may be formed such that coil patterns formed in adjacent pattern layers among the plurality of pattern layers are connected in parallel with each other. Accordingly, coils formed in the plurality of pattern layers may form a parallel connection relationship, and a large current capacity may be secured. The plurality of coil patterns CP forming each of the plurality of series pattern groups may be formed in four or more pattern layers. At least one of the plurality of series pattern groups may have a different combination of the plurality of pattern layers from the remaining series pattern groups. Accordingly, the wiring structure may be simplified, thereby reducing the number of interlayer connections, and thus reducing power loss. That is, by lowering the impedance gap between the parallel-connected series pattern groups due to mutual impedance in each pattern layer, it is possible to theoretically maintain the same efficiency characteristics as a full-layer series connection structure. In addition, by reducing the number of interlayer connections compared to the full-layer series connection structure and lowering the interlayer wiring resistance, a low-loss design is possible compared to the full-layer series connection structure. The plurality of series pattern groups may include at least two series pattern groups having the same combination of the plurality of pattern layers. As a result, the number of interlayer connections may be reduced.

In an embodiment, FIGS. 2 and 3 schematically illustrate a coil substrate 20 formed by stacking 16 pattern layers (the first layer to the sixteenth layer). In an embodiment, the coil substrate 20 has four series pattern groups 21 to 24. Each of the four series pattern groups 21 to 24 has four coil patterns CP that are connected in series. The four series pattern groups 21 to 24 are connected in parallel with each other. The difference between the sums of the lengths of the coil patterns CP forming each of the plurality of series pattern groups 21 to 24 may be 10% or less.

For example, referring to FIG. 3, the series pattern group 21 is formed by serially connecting coil patterns CP formed in the first layer, the eighth layer, the ninth layer, and the sixteenth layer. The series pattern group 22 is formed by serially connecting coil patterns CP formed in the second layer, the seventh layer, the tenth layer, and the fifteenth layer. The series pattern group 23 is formed by serially connecting coil patterns CP formed in the third layer, the sixth layer, the eleventh layer, and the fourteenth layer. The series pattern group 24 is formed by serially connecting coil patterns CP formed in the fourth layer, the fifth layer, the twelfth layer, and the thirteenth layer.

In this way, the series pattern groups 21 to 24 illustrated in FIGS. 2 and 3 have different combinations of pattern layers in which the series-connected coil patterns CP are formed. When the four series pattern groups 21 to 24 are connected in parallel, the coil patterns CP formed in different pattern layers are connected in parallel.

In addition, as illustrated in FIG. 2, in the coil substrate 20, two terminals (an input terminal 2a and an output terminal 2b) for parallel-connecting the plurality of series pattern groups 21 to 24 are formed on the outer periphery of the coil pattern CP. In addition, as illustrated in FIG. 3, the electrical connection between the pattern layers is formed by a conductor (a through hole TH) formed by penetrating the coil substrate 20. The through hole TH is formed by penetrating all the pattern layers PL. Four coil patterns CP forming each of the series pattern groups 21 to 24 are connected in series by one middle terminal 2c formed by a conductor installed on the outer periphery of the coil pattern CP and a plurality of connection terminals 2d formed by a conductor installed on the inner periphery of the coil pattern CP.

In addition, in the coil substrate 20 of the present embodiment, the coil patterns CP are connected such that the input terminal 2a side is the uppermost layer among the plurality of pattern layers PL and the output terminal 2b side is the lowermost layer among the plurality of pattern layers PL. According to this configuration, when forming multilayer coil patterns CP, if a weak electric sensor is mounted on the upper layer, it is easy to form the weak electric sensor in a thin film structure.

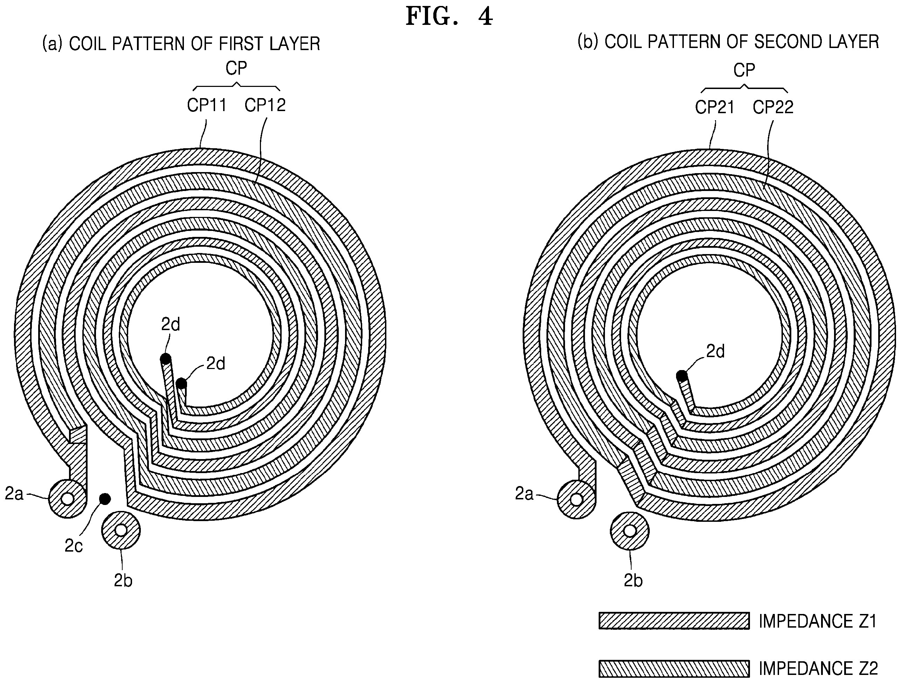

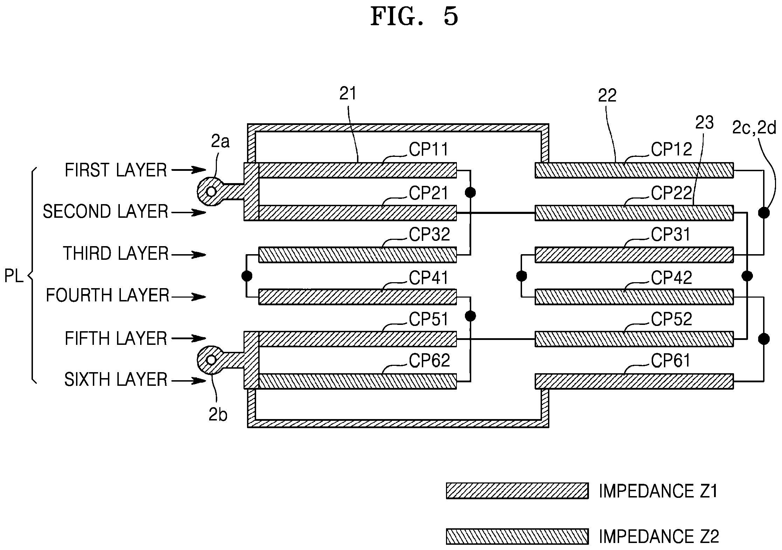

The multilayer structure of the coil substrate 20 is not limited to the 16-layer structure described above. FIG. 4 is a plan view schematically illustrating the coil patterns of the first and second layers of a coil substrate having a 6-layer structure according to an embodiment of the present disclosure. FIG. 5 is a schematic diagram illustrating an example of wiring of a coil substrate having a 6-layer structure according to an embodiment of the present disclosure.

Referring to FIGS. 4 and 5, the coil substrate 20 is a printed circuit board formed by stacking six pattern layers. In the coil substrate 20, each pattern layer includes a spiral or concentric coil pattern CP. Referring to FIGS. 4 and 5, the coil pattern CP of the first layer includes two spiral coil patterns CP11 and CP12 connected in parallel. The coil pattern CP of the second layer includes two spiral coil patterns CP21 and CP22 connected in series. The coil pattern CP of the third layer includes two independent spiral coil patterns CP31 and CP32. As a result, the coil patterns CP31 and CP32 are connected in parallel with each other. The coil pattern CP of the fourth layer has the same structure as the coil pattern CP of the third layer. The coil pattern CP of the fourth layer includes two independent spiral coil patterns CP41 and CP42. As a result, the coil patterns CP41 and CP42 are connected in parallel with each other. The coil pattern CP of the fifth layer has the same structure as the coil pattern CP of the second layer. That is, the coil pattern CP of the fifth layer includes two spiral coil patterns CP51 and CP52 connected in series. The coil pattern CP of the sixth layer has the same structure as the coil pattern CP of the first layer. That is, the coil pattern CP of the sixth layer includes two spiral coil patterns CP61 and CP62 connected in parallel.

The coil substrate 20 includes three series pattern groups 21 to 23, each including four coil patterns CP connected in series. Specifically, the series pattern group 21 includes coil patterns CP11, CP32, CP41, and CP62 connected in series with each other. The series pattern group 22 includes coil patterns CP12, CP31, CP42, and CP61 connected in series with each other. The series pattern group 23 includes coil patterns CP21, CP22, CP52, and CP51 connected in series with each other. The three series pattern groups 21 to 23 are connected in parallel. In this case, the difference between the sums of the lengths of the coil patterns CP forming each of the plurality of series pattern groups 21 to 23 may be 10% or less.

Among the three series pattern groups 21 to 23, two series pattern groups 21 and 22 are each formed by serially connecting four coil patterns CP respectively formed in four pattern layers. That is, the series pattern group 21 is formed by serially connecting four coil patterns CP11, CP32, CP41, and CP62 respectively formed in the first, third, fourth, and sixth layers, and the series pattern group 22 is formed by serially connecting four coil patterns CP12, CP31, CP42, and CP61 respectively formed in the first, third, fourth, and sixth layers. Therefore, the series pattern groups 21 and 22 have the same combination of pattern layers in which the series-connected coil patterns CP are formed. In addition, the series pattern group 23 is formed by serially connecting four coil patterns CP respectively formed in two pattern layers. That is, the series pattern group 23 is formed by serially connecting coil patterns CP21 and CP22 formed in the second layer to coil patterns CP52 and CP51 formed in the fifth layer. Therefore, the combination of pattern layers in which the series-connected coil patterns CP are formed in the series pattern group 23 is different from the combination of pattern layers in the two series pattern groups 21 and 22. According to this configuration, when the three series pattern groups 21 to 23 are connected in parallel, a structure in which coil patterns CP formed in different pattern layers are connected in parallel is formed.

In the coil substrate 20, the two terminals (the input terminal 2a and the output terminal 2b) that connect the plurality of series pattern groups 21 to 23 in parallel are formed on the outer periphery of the coil pattern CP. In addition, the electrical connection between the pattern layers is formed by a conductor (a through hole TH) formed by penetrating all the pattern layers. Coil patterns CP forming each of the series pattern groups 21 to 23 are connected in series by a connection terminal 2c formed by a conductor installed on the outer periphery of the coil pattern CP and a connection terminal 2d formed by a conductor installed on the inner periphery of the coil pattern CP.

Here, it is assumed that the impedance of each of the outer patterns CP11, CP21, CP31, CP41, CP51, and CP61 is Z1 and the impedance of each of the inner patterns CP12, CP22, CP32, CP42, CP52, and CP62 is Z2. In this case, the impedance of the series pattern group 21 in which the first, third, fourth, and sixth layers are connected in series is Z1 (the outer pattern CP11 in the first layer) + Z2 (the inner pattern CP32 in the third layer) + Z1 (the outer pattern CP41 in the fourth layer) + Z2 (the inner pattern CP62 in the sixth layer), that is, 2×Z1 + 2×Z2. In addition, the impedance of the series pattern group 22 in which the first, third, fourth, and sixth layers are connected in series is Z2 (the inner pattern CP12 in the first layer) + Z1 (the outer pattern CP31 in the third layer) + Z2 (the inner pattern CP42 in the fourth layer) + Z1 (the outer pattern CP61 in the sixth layer), that is, 2×Z1 + 2×Z2. In addition, the impedance of the series pattern group 23 in which the second layer and the fifth layer are connected in series is Z1 (the outer pattern CP21 in the second layer) + Z2 (the inner pattern CP22 in the second layer) + Z2 (the inner pattern CP52 in the fifth layer) + Z1 (the outer pattern CP51 in the fifth layer), that is, 2×Z1 + 2×Z2.

Therefore, the impedances of the three series pattern groups 21 to 23 are the same in calculation. According to this configuration, the current gap between a plurality of series pattern groups may be reduced by reducing the impedance gap between the plurality of series pattern groups, and thus, the coil loss may be reduced. The number of interlayer connections in the coil substrate 20 illustrated in FIG. 5 is 7.

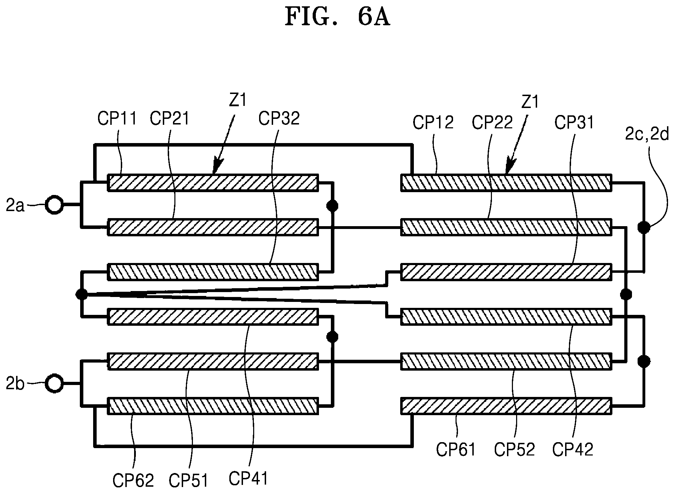

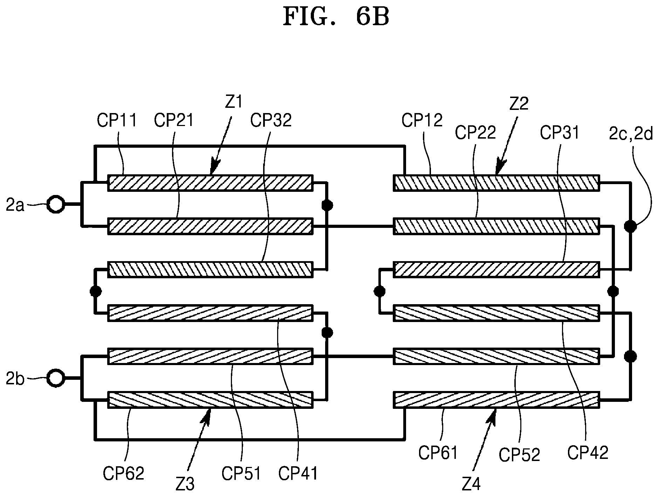

FIGS. 6A and 6B are schematic diagrams illustrating examples of wiring of a coil substrate having a 6-layer structure according to an embodiment of the present disclosure. First, referring to FIG. 6A, because the impedance gap between three series pattern groups 21 to 23 may be reduced, when the impedances of outer patterns CP11, CP21, CP31, CP41, CP51, and CP61 are all the same as Z1 and the impedances of inner patterns CP12, CP22, CP32, CP42, CP52, and CP62 are all the same as Z2, middle terminals of the series pattern group 21 and 22 may be integrated.

When the impedances of the outer patterns CP11, CP21, CP31, CP41, CP51, and CP61 are not the same and the impedances of the inner patterns CP12, CP22, CP32, CP42, CP52, and CP62 are not the same, the middle terminals of the series pattern group 21 and 22 need to be divided. For example, referring to FIG. 6B, when the impedance of each of the outer patterns CP11, CP21, and CP31 is Z1, the impedance of each of the outer patterns CP41, CP51, and CP61 is Z3, the impedance of each of the inner patterns CP12, CP22, and CP32 is Z2, the impedance of each of the inner patterns CP42, CP52, and CP62 is Z4, and Z1≠Z2≠Z3≠Z4, the middle terminals of the series pattern group 21 and 22 need to be divided.

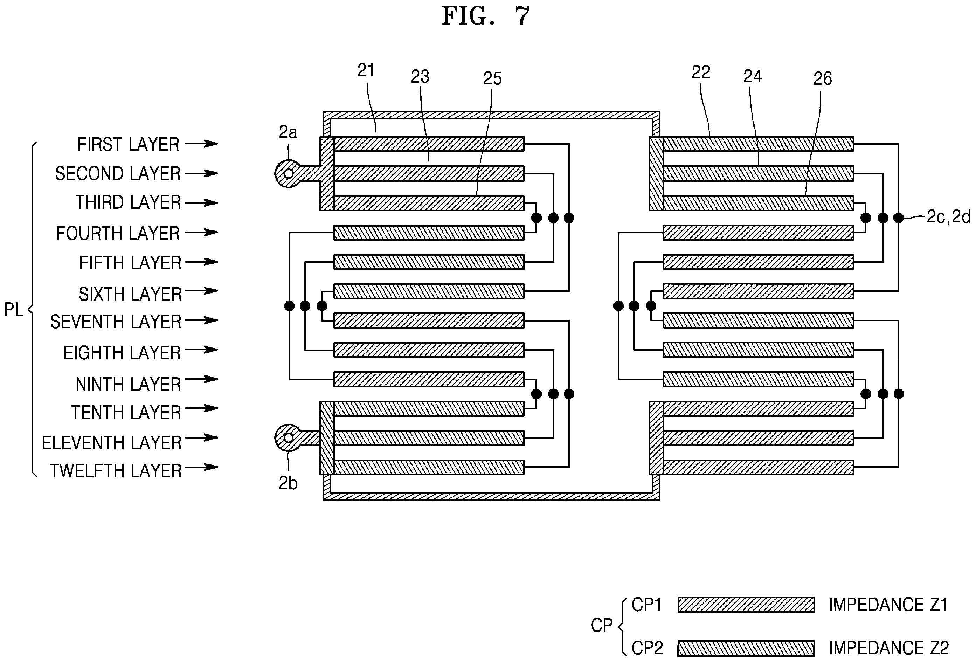

FIG. 7 is a schematic diagram illustrating an example of wiring of a coil substrate having a 12-layer structure according to an embodiment of the present disclosure. Referring to FIG. 7, the coil substrate 20 is a printed circuit board formed by stacking 12 pattern layers. Each of the pattern layers in the coil substrate 20 includes a spiral or concentric coil pattern CP. The coil pattern CP includes two coil patterns CP1 and CP2 whose impedance values are Z1 and Z2, respectively. Coil patterns CP of the first to third layers and the tenth to twelfth layers each have a structure in which two spiral coil patterns CP1 and CP2 are connected in parallel. Coil patterns CP of the fourth to ninth layers each include two independent spiral coil patterns CP1 and CP2.

The coil substrate 20 includes six series pattern groups 21 to 26. Each of the six series pattern groups 21 to 26 includes two coil patterns CP1 and two coil patterns CP2 that are connected in series with each other. The six series pattern groups 21 to 26 are connected in parallel. In this case, the difference in the sum of the lengths of the coil patterns constituting each of the plurality of series pattern groups 21 to 26 may be 10% or less.

For example, among the six series pattern groups 21 to 26, two series pattern groups 21 and 22 are each formed by serially connecting two coil patterns CP1 and two coil patterns CP2 formed in the first, sixth, seventh, and twelfth layers. In addition, two series pattern groups 23 and 24 are each formed by serially connecting two coil patterns CP1 and two coil patterns CP2 formed in the second, fifth, eighth, and eleventh layers. In addition, two series pattern groups 25 and 26 are formed by serially connecting two coil patterns CP1 and two coil patterns CP2 formed in the third, fourth, ninth, and tenth layers.

In addition, in the coil substrate 20, two terminals (an input terminal 2a and an output terminal 2b) that connect the plurality of series pattern groups 21 to 26 in parallel are formed on the outer peripheries of the coil patterns CP1 and CP2. The electrical connection between the pattern layers PL is formed by a conductor formed by penetrating all the pattern layers. For example, two coil patterns CP1 and two coil patterns CP2 that form each of the series pattern groups 21 to 26 are connected in series by a connection terminal 2c formed by a conductor (a through hole TH) installed on the outer peripheries of the coil patterns CP1 and CP2 and a connection terminal 2d formed by a conductor installed on the inner peripheries of the coil patterns CP1 and CP2.

According to this configuration, because the impedance of the six series pattern groups 21 to 26 is calculated to be 2×Z1 + 2×Z2, the impedance gap may be designed to be small, thereby reducing coil loss. In addition, the number of interlayer connections in the coil substrate 20 illustrated in FIG. 7 is 18.

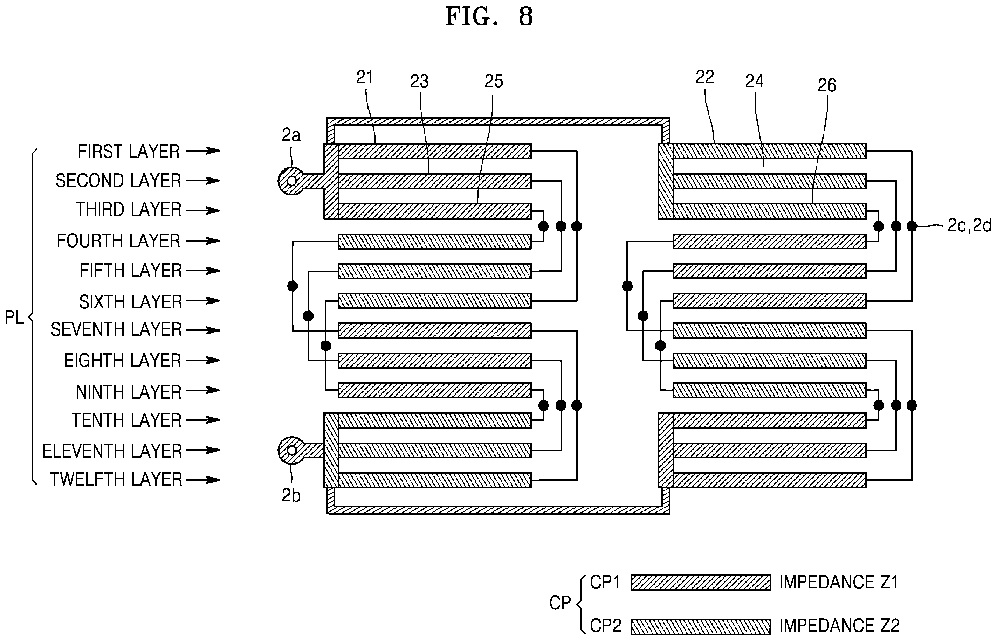

FIG. 8 is a schematic diagram illustrating an example of wiring of a coil substrate having a 12-layer structure according to an embodiment of the present disclosure. The coil substrate 20 illustrated in FIG. 8 is a printed circuit board formed by stacking 12 pattern layers, similar to the coil substrate 20 illustrated in FIG. 7, but a method of connecting the pattern layers is different from that in FIG. 7. In the coil substrate 20 illustrated in FIG. 7, pattern layers are connected symmetrically with respect to the center (between the sixth layer and the seventh layer) of the pattern layers, but in the coil substrate 20 illustrated in FIG. 8, pattern layers are connected asymmetrically with respect to the center (between the sixth layer and the seventh layer) of the pattern layers.

Referring to FIG. 8, in forming series pattern groups 21 to 26, a coil pattern CP formed in the uppermost pattern layer is connected in series to a coil pattern CP formed in a pattern layer other than the lowermost layer. In forming the series pattern groups 21 to 26, a coil pattern CP close to the uppermost pattern layer is connected in series to a coil pattern CP formed in a pattern layer far from the lowermost pattern layer.

In an embodiment, two series pattern groups 21 and 22 are formed by serially connecting two coil patterns CP1 and two coil patterns CP2 formed in the first, sixth, ninth, and tenth layers. In addition, two series pattern groups 23 and 24 are each formed by serially connecting two coil patterns CP1 and two coil patterns CP2 formed in the second, fifth, eighth, and eleventh layers. In addition, two series pattern groups 25 and 26 are each formed by serially connecting two coil patterns CP1 and two coil patterns CP2 formed in the third, fourth, seventh, and twelfth layers.

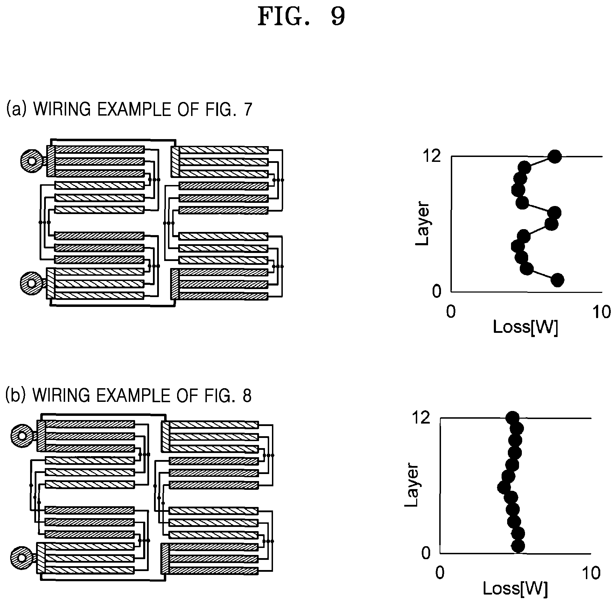

FIG. 9 is an experimental result showing coil loss in examples of wiring of a coil substrate 20 having a 12-layer structure illustrated in FIGS. 7 and 8. Referring to FIG. 9, even when the magnetic impedances of the series pattern groups 21 to 26 are designed to be the same, in actual driving, the influence of mutual impedance is particularly reduced on a surface layer (for example, the first and twelfth layers in the case of the 12-layer structure) side, and the current flowing therein increases, and thus, the coil loss increases. When coil patterns having a small influence of mutual impedance are serially connected, an impedance gap due to the proximity effect of a plurality of series pattern groups connected in parallel may increase. Therefore, in order to reduce the impedance gap due to the proximity effect of a plurality of series pattern groups connected in parallel, it is better not to serially connect coil patterns having a small influence of mutual impedance, as shown in FIG. 8. In other words, wiring so that a coil pattern having a large influence of mutual impedance and a coil pattern having a small influence of mutual impedance are serially connected is advantageous in reducing the impedance gap due to the proximity effect of a plurality of series pattern groups connected in parallel. For example, the plurality of series pattern groups 21 to 26 may be formed such that a coil pattern formed in the uppermost pattern layer is serially connected to a coil pattern formed in a pattern layer other than the lowermost layer.

Although not shown in the drawings, the number of pattern layers of the coil substrate 20 may be other than 6, 12, or 16 layers, for example, 10 layers. In addition, the series pattern group may have a structure in which 5 or more coil patterns are serially connected.

The present disclosure provides a coil substrate having a multilayer coil pattern structure capable of reducing coil loss and an induction heating cooker employing the coil substrate. The present disclosure provides a coil substrate having a multilayer coil pattern structure capable of reducing the number of interlayer connections and an induction heating cooker employing the coil substrate. The purpose of the present disclosure is not limited thereto.

An induction heating cooker according to an aspect of the present disclosure may include a top plate on which an object to be heated is placed, and a plurality of heating coils. The plurality of heating coils are for heating the object to be heated. Each of the plurality of heating coils may include a coil substrate formed by stacking a plurality of pattern layers of six or more layers, each of which has a coil pattern formed therein. The coil substrate may include a plurality of series pattern groups each including a plurality of coil patterns connected in series. The plurality of series pattern groups are connected in parallel. An inverter circuit supplies an alternating current to the heating coils. A processor controls the inverter circuit. With a stacked structure of six or more layers, it is possible to reduce the thickness of copper in one layer and to reduce coil loss by reducing the influence of a skin effect.

In an embodiment, at least one of the plurality of series pattern groups may be obtained by serially connecting the coil patterns formed in four or more pattern layers. As a result, the number of interlayer connections may be reduced.

In an embodiment, the plurality of series pattern groups may be formed such that coil patterns formed in adjacent pattern layers among the plurality of pattern layers are connected in parallel with each other. Accordingly, coils formed in the plurality of pattern layers may form a parallel connection relationship, and a large current capacity may be secured.

In an embodiment, at least one of the plurality of series pattern groups may have a different combination of the plurality of pattern layers from the remaining series pattern groups. In an embodiment, the plurality of series pattern groups may include at least two series pattern groups having the same combination of the plurality of pattern layers. Accordingly, the number of interlayer connections may be reduced, and the loss due to interlayer connections may be reduced, thereby reducing the overall loss.

In an embodiment, the plurality of series pattern groups may be formed such that a coil pattern formed in the uppermost layer is connected in series to a coil pattern formed in a pattern layer other than the lowermost layer. Accordingly, an impedance gap due to the proximity effect of a plurality of series pattern groups connected in parallel may be reduced.

In an embodiment, the difference between total lengths of the plurality of coil patternsconstituting each of the plurality of series pattern groups is 10% or less. As the difference between the total lengths of the coil patterns of the plurality of series pattern groups increases, the current gap between the plurality of parallel-connected series pattern groups may increase, and thus, loss may increase. By making the difference between the total lengths of the coil patterns of the plurality of series pattern groups 10% or less, a current balance may be achieved in an alternating current of the kilohertz order or higher.

In an embodiment, two terminals connecting the plurality of series pattern groups in parallel may be formed on the outer periphery of the coil pattern. In an embodiment, the electrical connection between the plurality of pattern layers may be formed by a conductor formed by penetrating the plurality of pattern layers. As a result, the manufacturing costs of the coil substrate may be reduced.

In an embodiment, the coil pattern may have a spiral shape.

As described above, although the induction heating cooker of the present disclosure has been described with limited embodiments and drawings, the present disclosure is not limited to the above-described embodiments, and various modifications may be made without departing from the spirit thereof.

## Claims

1. An induction heating cooker comprising:
a top plate (1) on which an object to be heated is placed;
a plurality of heating coils (1) configured to heat the object to be heated, each of the plurality of heating coils including a coli substrate (20) formed by stacking a plurality of pattern layers (PL) of 6 or more layers, each of which has a coil pattern (CP) formed therein, wherein the coil substrate includes a plurality of series pattern groups (21 to 26) each including a plurality of coil patterns connected in series and the plurality of series pattern groups are connected in parallel;
an inverter circuit (3) configured to supply an alternating current to the heating coils; and
a processor (41) configured to control the inverter circuit;

2. The induction heating cooker of claim 1, wherein at least one of the plurality of series pattern groups is obtained by serially connecting the coil patterns formed in four or more pattern layers.

3. The induction heating cooker of claim 1 or 2, wherein the plurality of series pattern groups are formed such that coil patterns formed in adjacent pattern layers among the plurality of pattern layers are connected in parallel with each other.

4. The induction heating cooker of any one of claims 1 to 3, wherein at least one of the plurality of series pattern groups has a different combination of the plurality of pattern layers than remaining series pattern groups.

5. The induction heating cooker of any one of claims 1 to 4, wherein the plurality of series pattern groups include at least two series pattern groups having a same combination of the plurality of pattern layers.

6. The induction heating cooker of any one of claims 1 to 5, wherein the plurality of series pattern groups are formed such that a coil pattern formed in an uppermost layer is connected in series to a coil pattern formed in a pattern layer other than a lowermost layer.

7. The induction heating cooker of any one of claims 1 to 6, wherein a difference between total lengths of the plurality of coil patterns constituting each of the plurality of series pattern groups is 10% or less.

8. The induction heating cooker of any one of claims 1 to 7, wherein two terminals (2a, 2b) connecting the plurality of series pattern groups in parallel are formed on an outer periphery of the coil pattern.

9. The induction heating cooker of any one of claims 1 to 8, wherein an electrical connection between the plurality of pattern layers is formed by a conductor (TH) formed by penetrating the plurality of pattern layers.

10. The induction heating cooker of any one of claims 1 to 9, wherein the coil pattern has a spiral shape.
